# EUROPEAN PATENT APPLICATION

(11) **EP 3 734 379 A1**
(43) Date of publication of application: **04.11.2020**
(21) Application number: 19171860.0
(22) Date of filing: 30.04.2019
(51) Int. Cl.: G05B 19/05

(54) **METHOD AND SYSTEM FOR GENERATING CONTROL PROGRAMS IN A CLOUD COMPUTING ENVIRONMENT**

(71) Applicant: Siemens Aktiengesellschaft, 80333 München (DE)
(72) Inventor: UPPUNDA, Prashanth, 560083 Bangalore, Karnataka (IN)
(74) Representative: Isarpatent

(57) **Abstract**

A method and system for generating a control program on a cloud computing environment (100) is disclosed. The method includes receiving an engineering project file from at least one engineering system (110A-N) via a communication network (104). The engineering project file comprises a control program desired to be deployed on an asset(s)(108A-N) in a technical installation (106). Further, the method includes determining one or more modifications made in the control program based on a corresponding pre-stored control program. The method further includes dynamically generating a modified control program based on the one or more modifications made in the control program. Additionally, the method includes outputting the modified control program on a user interface of the at least one engineering system (110A-N).

## Description

The present invention relates to cloud computing systems and more particularly relates to a method and system for generating control programs in a cloud computing environment.

A factory or a plant typically hosts several programmable logic controllers (PLC). Each PLC controls a specific part of the factory or a specific machine. During initial commissioning phase, control programs such as PLC programs are written using an engineering application to meet specific control conditions of the factory. These PLC programs are compiled, tested, and deployed to specific PLC's in the factory.

Once the initial commissioning is completed, the PLC programs may need continuous changes or adaptations in order to meet the changing requirements of the factory. Also, each time when an issue arising in the factory needs to be fixed or if a process needs to be improved, the PLC program needs to be modified. Such a task of updating and deploying of PLC program often is a time-consuming. For example, when a PLC program needs to be modified, the PLC program or specific part of the PLC program is built and compiled with all relevant PLC programs. Later, automated tests are executed on those modified PLC programs, and finally the PLC program are downloaded on the desired PLC device. These leads to increased time and efforts spent on developing automation solutions.

In light of above, there is a need for an improved method and system for generating control programs.

Therefore, it is an object of the present invention to provide a method and system for dynamically generating control programs in a cloud computing environment.

The object of the present invention is achieved by a method for dynamically generating control programs in a cloud computing environment. The method comprises receiving an engineering project file from at least one engineering system via a wireless communication network. The engineering project file comprises a control program desired to be deployed on an asset(s) in a technical installation. In an embodiment, the engineering project file comprises general configuration information such as hardware configuration and programming information such as programmable logic controller (PLC) control logic implementation. The control program comprises one or more dependent control programs and a common control program. The target control program comprises compiled one or more dependent control programs and compiled common control program. In an exemplary embodiment, the control program comprises a PLC program. The PLC program comprises multiple parts referred as function blocks. Each function block resides in a separate part file as part of the engineering project file.

The method comprises determining one or more modifications made in the control program based on a corresponding pre-stored control program. The one or more modifications in the control program are made by multiple users accessing the same engineering project file via multiple engineering systems in collaboration fashion connected to a cloud computing system. The one or more modifications comprises adding, deleting and modifying information associated with the asset(s) in the control program. The information associated with the asset(s) comprises device configuration information, device ID, device name and the like. The pre-stored control program corresponds to the last modified version of the control program associated with the engineering project file.

The method comprises dynamically generating a modified control program based on the one or more modifications made in the control program. In an embodiment, the modified control program corresponds to a compiled PLC program. Additionally, the method comprises outputting the modified control program on a user interface of the at least one engineering system.

In a preferred embodiment, the method comprises simulating behavior of the modified control program in a simulated environment on one or more simulation instances associated with a virtual asset. The simulated environment comprises a similar setup as that of the real plant comprising all components and configurations. In a preferred embodiment, the simulated environment may be a virtual environment. Further, the method comprises analyzing simulation results of the modified control program. The simulation results are indicative of the behavior of the virtual asset representing execution of the control program in real time. Further, the method comprises updating the modified control program based on the analysis of the simulation results.

In simulating behavior of the modified control program in the simulated environment on the one or more simulation instances associated with the virtual asset, the method comprises downloading the modified control program onto the virtual asset in the simulated environment. The method comprises generating the one or more simulation instances based on configuration of the virtual asset using the modified control program. Furthermore, the method comprises executing one or more pre-defined tests on the virtual asset using the one or more simulation instances. Additionally, the method comprises simulating the behavior of the modified control program on the virtual asset in the simulated environment.

Further, the method comprises initiating deployment of the modified control program on the asset(s) in the technical installation. In an embodiment, the asset(s) comprises PLC. In an embodiment, the deployment happens automatically onto the PLC.

In another preferred embodiment, in determining one or more modifications in the control program, the method comprises identifying unique identifier (ID) associated with the received engineering project file. Further, the method comprises retrieving corresponding pre-stored engineering project file from a database based on the identified unique ID. Furthermore, the method comprises comparing the control program in the received engineering project file with the corresponding pre-stored control program. Additionally, the method comprises determining the one or more modifications made in the control program based on the comparison results.

In yet another preferred embodiment, in dynamically generating the modified control program based on the one or more modifications, the method comprises updating the pre-stored control program with the determined one or more modifications. Further, the method comprises automatically compiling the pre-stored control program with corresponding dependent control programs. Also, the method comprises dynamically generating a modified control program. The modified control program comprises compiled dependent control programs and a compiled common control program.

In yet another aspect of the embodiment, the method comprises determining one or more engineering systems in the technical installation currently accessing the engineering project file. Further, the method comprises transmitting a program update message to the one or more engineering systems for automatically synchronizing the modified control program with corresponding locally stored control program.

The object of the present invention is also achieved by a control program management system. The control program management system comprises one or more processor(s) and a memory coupled to the processor. The memory comprises a control program management module stored in the form of machine-readable instructions executable by the processor. The control program management module is configured for performing the method as described above.

The object of the present invention is also achieved by a cloud computing system comprising a server and a cloud platform comprising a control program management system stored therein in the form of machine-readable instructions executable by the server. The control program management system is configured to perform the method as described above.

The object of the present invention is also achieved by a cloud computing environment. The cloud computing environment comprising a cloud computing system, a plant environment comprising one or more assets and at least one engineering system communicatively coupled to the cloud computing system and the plant environment.

The object of the present invention is also achieved by a computer-program product having machine-readable instructions stored therein, that when executed by one or more server(s), cause the one or more server (s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a schematic representation of a cloud computing environment capable of dynamically generating control programs, according to an embodiment of the present invention;
- FIG 2: is a block diagram of a control program management system, such as those shown in FIG 1, in which an embodiment of the present invention can be implemented;
- FIG 3: is a block diagram of a control program management module, such as those shown in FIG 1 and FIG 2, in which an embodiment of the present invention can be implemented;
- FIG 4: is a process flowchart illustrating an exemplary method of generating control programs in a cloud computing environment, according to an embodiment of the present invention;
- FIG 5: is an exemplary schematic representation of storing control programs in a version management module, according to an embodiment of the present invention; and
- FIG 6: is a screenshot of an exemplary graphical user interface for displaying one or more behavior models of virtual asset(s) loaded with modified control program, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

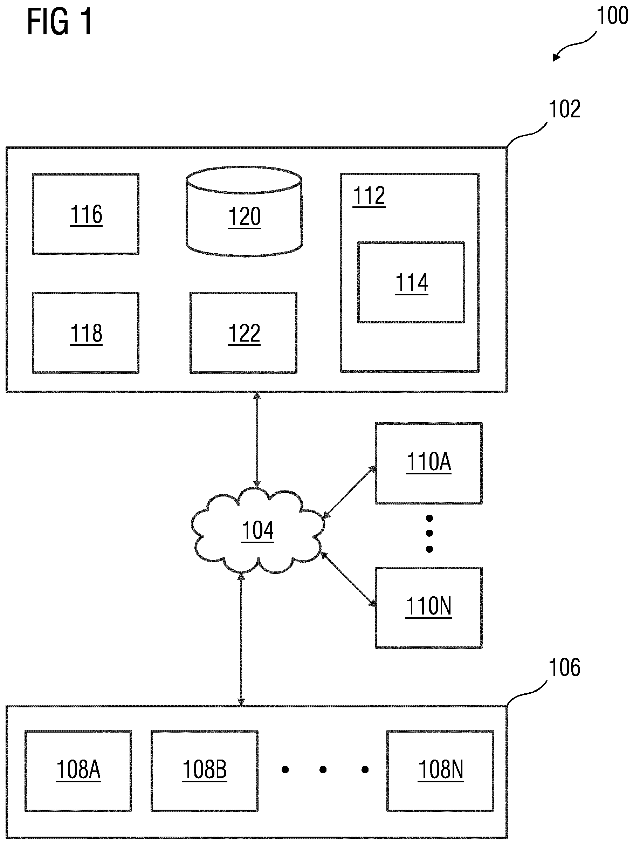

FIG 1 is a schematic representation of a cloud computing environment 100 capable of dynamically generating control programs, according to an embodiment of the present invention. Particularly, FIG 1 depicts a cloud computing system 102 which is capable of delivering cloud applications for managing a technical installation 106 comprising one or more asset(s) 108AN. As used herein, "cloud computing environment" refers to a processing environment comprising configurable computing physical and logical resources, for example, networks, servers, storage, applications, services, etc., and data distributed over the cloud platform. The cloud computing environment 100 provides on-demand network access to a shared pool of the configurable computing physical and logical resources. In an embodiment, the technical installation 106 may comprise a plant or an industry.

The cloud computing system 102 is connected to the one or more asset(s) 108A-N in the technical installation 106 via a network 104 (e.g., Internet). The one or more asset(s) 108A-N may include servers, robots, switches, automation devices, programmable logic controllers (PLC)s, human machine interfaces (HMIs), motors, valves, pumps, actuators, sensors and other industrial equipment (s). In a preferred embodiment, the one or more asset(s) 108A-N comprises a control device, such as the PLC(s). The cloud computing system 102 may be a public cloud, a private cloud, and/or a hybrid cloud configured to provide dedicated cloud services to its users. Although, FIG 1 illustrates the cloud computing system 102 connected to one technical installation 106, one skilled in the art can envision that the cloud computing system 102 can be connected to several technical installations 106 located at different locations via the network 104.

Further, the cloud computing system 102 is also connected to user devices 110A-N via the network 104. The user devices 110A-N can access the cloud computing system 102 for automatically generating control programs. In an embodiment, the user devices 110A-N comprises an engineering system capable of running an industrial automation application. The user devices 110A-N can be a laptop computer, desktop computer, tablet computer, smartphone and the like. The user devices 110A-N can access cloud applications (such as providing performance visualization of the one or more asset (s) 108A-N) via a web browser. Also, each of the user(s) using the user devices 110A-N is associated with a defined privilege for accessing the engineering project files. The defined privileges may include geographical location(s) of the user, role of the user, version of the industrial automation application and the like. The defined privileges comprises read access, write access, read and write access, and read or write access.

Throughout the specification, the terms "user devices" and "engineering systems" are used interchangeably.

The cloud computing system 102 comprises a cloud platform 112, a control program management system 114, a server 116 including hardware resources and an operating system (OS), a network interface 118 and a database 120. The network interface 118 enables communication between the cloud computing system 102, the technical installation 106, and the engineering system(s) 110A-N. Also, the network interface 118 enables communication between the cloud computing system 102 and the engineering system(s) 110A-N. The cloud interface (not shown in FIG 1) may allow the engineers at the one or more engineering system (s) 110A-N to access engineering project files stored at the cloud computing system 102 and perform one or more actions on the engineering project files as same instance. The server 116 may include one or more servers on which the OS is installed. The servers 116 may comprise one or more processors, one or more storage devices, such as, memory units, for storing data and machine-readable instructions for example, applications and application programming interfaces (APIs) 122, and other peripherals required for providing cloud computing functionality. The cloud platform 112 is a platform which enables functionalities such as data reception, data processing, data rendering, data communication, etc. using the hardware resources and the OS of the servers 116 and delivers the aforementioned cloud services using the application programming interfaces 122 deployed therein. The cloud platform 112 may comprise a combination of dedicated hardware and software built on top of the hardware and the OS.

The database 120 stores the information relating to the technical installation 106 and the engineering system(s) 110A-N. The database 120 is, for example, a structured query language (SQL) data store or a not only SQL (NoSQL) data store. The database 120 is configured as cloud-based database implemented in the cloud computing environment 100, where computing resources are delivered as a service over the cloud platform 112. The database 120, according to another embodiment of the present invention, is a location on a file system directly accessible by the control program management system 114. The database 120 is configured to store engineering project files, control programs comprising common control program and one or more dependent control programs, modified control programs, test results, simulation results, status messages, behavior models associated with the one or more asset (s) 108A-N, one or more simulation instances associated with a virtual asset, program update messages and the like.

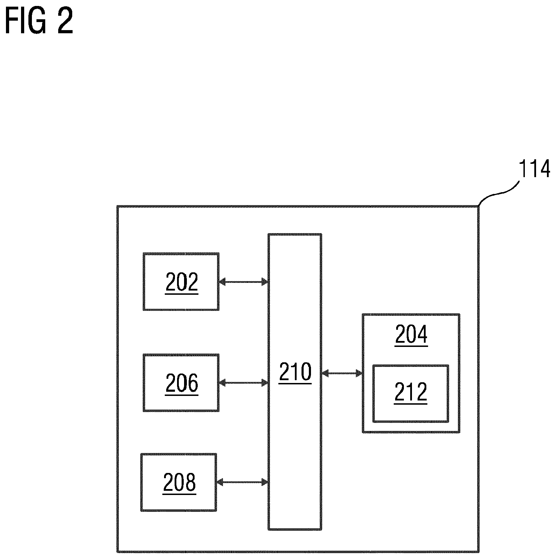

FIG 2 is a block diagram of a control program management system 114, such as those shown in FIG 1, in which an embodiment of the present invention can be implemented. In FIG 2, the control program management system 114 includes a processor(s) 202, an accessible memory 204, a communication interface 206, an input-output unit 208, and a bus 210.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor (s) 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processor (s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes a control program management module 212 stored in the form of machine-readable instructions on any of the above-mentioned storage media and may be in communication with and executed by the processor(s) 202.

When executed by the processor(s) 202, the control program management module 212 causes the processor(s) 202 to automatically generate control programs in a cloud computing environment 100. In an embodiment, the control program management module 212 causes the processor(s) 202 to receive an engineering project file from at least one engineering system 110A-N via a wireless communication network 104. The engineering project file comprises a control program desired to be deployed on the asset (s) 108A-N in the technical installation 106. The control program comprises one or more dependent control programs and a common control program. Upon receiving the engineering project file, the control program management module 212 causes the processor(s) 202 to determine one or more modifications made to the control program based on a corresponding pre-stored control program. The pre-stored control program is stored on the database 120.

In an embodiment, one or more modifications made in the control program are determined by identifying unique identifier (ID) associated with the received engineering project file. Further, the control program management module 212 causes the processor(s) 202 to retrieve corresponding pre-stored engineering project file from a database (120) based on the identified unique ID. Furthermore, the control program management module 212 causes the processor(s) 202 to compare the control program in the received engineering project file with the corresponding pre-stored control program. Further, the control program management module 212 causes the processor(s) 202 to determine the one or more modifications made in the control program based on the comparison results.

Further, the control program management module 212 causes the processor(s) 202 to dynamically generate a modified control program based on the one or more modifications made in the control program. The modified control program comprises compiled one or more dependent control programs and compiled common control program. Further, the control program management module 212 causes the processor(s) 202 to output the modified control program on a user interface of the engineering system 110A-N.

The control program management module 212 causes the processor(s) 202 to simulate behavior of the modified control program in a simulated environment on one or more simulation instances associated with a virtual asset. Further, the control program management module 212 causes the processor(s) 202 to analyze simulation results of the modified control program. The simulation results are indicative of the behavior of the virtual asset when the control program is executed in real time. Furthermore, the control program management module 212 causes the processor to update the modified control program based on the analysis of the simulation results. In an embodiment, in simulating behavior of the modified control program in the simulated environment on the one or more simulation instances associated with the virtual asset, the control program management module 212 causes the processor(s) 202 to download the modified control program onto the virtual asset in the simulated environment. Further, the control program management module 212 causes the processor (s) 202 to generate the one or more simulation instances based on configuration of the virtual asset using the modified control program. The control program management module 212 causes the processor(s) 202 to execute one or more pre-defined tests on the virtual asset using the one or more simulation instances. Furthermore, the control program management module 212 causes the processor(s) 202 to simulate the behavior of the modified control program on the virtual asset in the simulated environment.

The control program management module 212 causes the processor(s) 202 to initiate deployment of the modified control program on the asset(s) 108A-N in the technical installation 106.

In an embodiment, in dynamically generating the modified control program based on the one or more modifications, the control program management module 212 causes the processor(s) 202 to update the pre-stored control program with the determined one or more modifications. Further, the control program management module 212 causes the processor(s) 202 to automatically compile the pre-stored control program with corresponding dependent control programs. Also, the control program management module 212 causes the processor(s) 202 to dynamically generate a modified control program. The modified control program comprises compiled dependent control programs and a compiled common control program.

In an embodiment, the control program management module 212 causes the processor(s) 202 to determine one or more engineering systems 110A-N in the technical installation 106 currently accessing the engineering project file. The control program management module 212 further causes the processor(s) 202 to transmit a program update message to the one or more engineering systems 110A-N for automatically synchronizing the modified control program with corresponding locally stored control program.

The communication interface 206 is configured for establishing communication sessions between the one or more engineering systems 110A-N and the cloud computing system 102. The communication interface 206 allows the one or more engineering applications running on the engineering systems 110A-N to import/import engineering project files into the cloud computing system 102. In an embodiment, the communication interface 206 interacts with the interface at the one or more engineering systems 110A-N for allowing the engineers to access the control programs in the engineering project file and perform one or more actions on the control program stored in the cloud computing system 102.

The input-output unit 208 may include input devices a keypad, touch-sensitive display, camera (such as a camera receiving gesture-based inputs), etc. capable of receiving one or more input signals, such as user commands to process engineering project file. Also, the input-output unit 208 may be a display unit for displaying a graphical user interface which visualizes the behavior model associated with the modified control program and also displays the status information associated with each set of actions performed on the control program. The set of actions may include execution of predefined tests, download, compile and deploy of control programs. The bus 210 acts as interconnect between the processor 202, the memory 204, and the input-output unit 208.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of a cloud computing system 102 as is unique to the present disclosure or necessary for an understanding of the present disclosure is depicted and described. The remainder of the construction and operation of the cloud computing system 102 may conform to any of the various current implementation and practices known in the art.

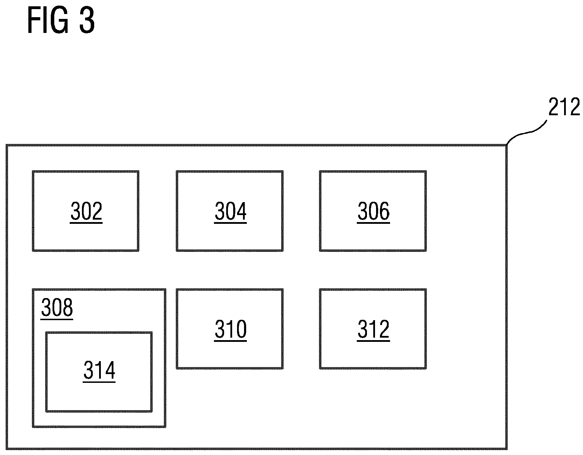

FIG 3 is a block diagram of a control program management module 212, such as those shown in FIG. 1 and FIG.2, in which an embodiment of the present invention can be implemented. The control program management module 212 comprises a version management module 302, a dependency check module 304, a control program processing module 306, a simulation environment 308, a deployer module 310, and an output module 312.

The version management module 302 is configured for receiving an engineering project file from at least one engineering system 110A-N via a communication network 104. A typical engineering project consists of general configuration aspects such as hardware configuration and then programming aspects such as a PLC control logic implementation. The version management module 302 is configured for storing these engineering project files in the database 120. The engineering project file comprises a control program desired to be deployed on an asset(s) 108A-N in a technical installation 106. A control program constitutes of multiple parts called as function blocks, each of which residing in a separate part file as part of the main control program. These function blocks may be referred as dependent control programs. In an embodiment, the control program also comprises a common control program. The common control program may correspond to a non programming part of the control program. However, the dependent control program correspond to a programming part of the control program. Hence, the common control program is stored as a separate compressed archive file (for example zip file) under a main engineering project folder. The dependent control programs are then stored in a domain specific folder structure. The domain specific folder structure may be user specific. Also, the domain specific folder structure includes function blocks such as conveyer logic, motor logic and the like. The dependent control programs are stored separately as normal block files, such as for example, scl or as common library reference files, such as for example Ink file. The dependent control programs may comprise a text file representation of control logic, such as for example PLC logic. This allows for multiple users of the engineering systems 110A-N to work on same engineering project file simultaneously and subsequently merge the modifications made by these multiple users to the control program. However, the common control program is accessed by one user at a time and only that user currently accessing the common control program is allowed to make modifications to the common control program. Upon receiving such modifications to the common control program by a particular user, the version management module 302 updates the database 120 with the latest version of the common control program. Hence, the version management module 302 maintains the latest version of the control program. The version management module 302 enables users of the engineering system 110A-N to access the latest version of the control program.

In an embodiment, the version management module 302 stores all common libraries required for programming the control program.

The same folder structure is maintained at both the database 120 and at the version management module 302.

The dependency checker module 304 is configured for determining one or more modifications made in the control program based on a corresponding pre-stored control program. The one or more modifications comprises adding, deleting or modifying information associated with the asset(s) 108A-N in the control program. In determining the one or more modifications, the dependency checker module 304 is configured for first identifying unique identifier (ID) associated with the received engineering project file. Further, the dependency checker module 304 is configured for retrieving corresponding pre-stored engineering project file from the database 120 based on the identified unique ID. For example, the database 120 comprises engineering project file A having a unique ID "Project-1". Also, consider that the received engineering project file A has unique ID "Project-1". Now, the dependency checker module 304 maps the received engineering project file A with the all the stored engineering project files based on the unique ID "Project-1" and retrieves the stored engineering project file A. Further, the dependency checker module 304 is configured for comparing the control program in the received engineering project file with the corresponding pre-stored control program. For example, the received engineering project file A comprises control program A and the pre-stored engineering project file A comprises control program A'. The dependency checker module 304 compares the control program A with control program A'. This may be done by using any machine learning algorithms known in the art. Further, based on the comparison results, the dependency checker module 304 determines the one or more modifications made in the received control program. For example, parameters of a device are changed in the control program A when compared to the same parameters of the device in control program A'. Such modifications are determined. The dependency checker module 304 generates a program modification list comprising the list of determined modifications made in the control program.

The control program processing module 306 is configured for dynamically generating a modified control program based on the one or more modifications made in the control program. Specifically, when the control program processing module 306 receives the program modification list from the dependency checker module 304, the control program processing module 306 is configured for updating the pre-stored control program with the determined one or more modifications. Upon updating, the control program processing module 306 is configured for automatically compiling the pre-stored control program with corresponding dependent control programs. In an exemplary embodiment, the pre-stored control programs comprises one or more dependent control programs and a common control program. Each of the dependent control program and the common control program is associated with a name and unique ID. Further, each of the dependent control program associated with the main control program is classified into different function blocks based on a set of parameters. For example, the set of parameters include function block ID, function block name, and function block type. Hence, it is first determined whether which part of the control program is modified based on the classification of the control program. For example, if it is determined that dependent control program A1 of the main control program A is modified, then the corresponding pre-stored dependent control program A'1 of the main control program A' is updated. Finally, the updated dependent control program A'1 is compiled with rest of the dependent control programs of the main control program A'.

Then, the control program processing module 306 is configured for dynamically generating a modified control program. The modified control program comprises compiled dependent control programs and a compiled common control program. Once the modified control program is generated, the control program processing module 306 provides the modified control program to a simulation environment 308.

The simulation environment 308 is configured for simulating behavior of the modified control program in a simulation environment (308) on one or more simulation instances associated with a virtual asset (314). In an embodiment, the simulation environment 308 comprises one or more virtual asset (s) 314. The simulation environment 308 emulates an actual technical installation, such as technical installation 106. Similarly, the virtual asset (s) 314 in the simulation environment 308 emulates the actual asset (s) 108A-N. In an exemplary environment, the virtual asset(s) may include servers, robots, switches, automation devices, programmable logic controllers (PLC)s, human machine interfaces (HMIs), motors, valves, pumps, actuators, sensors and other industrial equipment. In a preferred embodiment, the virtual asset(s) 314 comprises a control device, such as the PLCs. Further, the simulation environment 308 may be a virtual setup of the actual technical installation 106. Upon receiving the modified control program from the control program processing module 306, the simulation environment 308 is configured for first downloading the modified control program onto the virtual asset 314 in the simulation environment 308. The simulation environment 308 identifies the desired virtual asset (s) 314 on which the modified control program is to be executed based on a configuration file. The configuration file comprises list of engineering project files correspondingly mapped to the virtual asset(s) 314. Then, the simulation environment 308 downloads the modified control program onto the identified virtual asset(s) 314.

The simulation environment 308 is configured for generating the one or more simulation instances based on configuration of the virtual asset(s) 314 using the modified control program.

The simulation environment 308 is then configured for executing one or more pre-defined tests on the virtual asset (s) 314 using the one or more simulation instances. In an embodiment, the one or more pre-defined tests may be user defined. The test results indicate the impact of the modified control program in the simulation environment 308. For example, the test results may indicate asset conditions, predict any errors/faults that is raised due to the modified control program or indication of a fault which is resolved now after implementing the modified control program. Further, the simulation environment 308 is configured for simulating the behavior of the modified control program on the virtual asset(s) 314. Upon simulation, the simulation environment 308 is configured for analyzing the simulation results of the modified control program. The simulation results are indicative of the behavior of the virtual asset(s) 314 when the control program is executed in real time. For example, the simulation results indicate positive behavioral impact of the virtual asset(s) 314 when the control program is executed in real-time. On the other hand, the simulation results may also indicate negative behavioral impact of the virtual asset(s) 314 when the control program is executed in real-time. The simulation results also indicate the impact of the modified control program onto whole of technical installation, such as the technical installation 106, in real time.

Upon analysis of the simulation results, the simulation environment 308 is further configured for updating the modified control program based on the simulation results. For example, if the simulation results are negative, then the simulation environment 308 updates specific portion of the modified control program in order to achieve positive simulation result. Since the simulation result indicate the faults raised due to the modified control program, the simulation environment 308 analyze these faults and generates a possible modification that could be made to the modified control program in order to resolve this fault. The modified control program is then updated with the possible modification rectifying the faults indicated in the simulation result. The simulation environment 308 then provides the modified control program to the deployer module 310.

The deployer module 310 is configured for initiating deployment of the modified control program on the asset(s) 108A-N in the technical installation 106. When once the modified control program is verified to be successfully simulated on the simulation environment 308, the deployer module 310 deploys a part or the entire modified control program onto the asset(s) 108A-N of the technical installation 106. The deployer module 310 deploys the modified control program on the asset (s) 108A-N based on the configuration file. Also, the deployer module 310 deploys the modified control program on the asset(s) 108A-N using internet protocol (IP) address of the asset(s) 108A-N.

The output module 312 is configured for the modified control program on a user interface of the at least one engineering system 110A-N. The modified control program may be displayed to the user before deployment onto the asset(s) 108A-N. Further, the output module 312 is configured for generating status messages during compilation, simulation, download and deployment. Further, the output module 312 is configured for displaying the status message on the user interface. For example, during compilation, if there are any errors, the output module 312 generate the status message of this action accordingly and displays it on the user interface. Similarly, during download and simulation on simulation environment 308 if there are any errors, the output module 312 generate the status message accordingly and displays them on the user interface. In an embodiment, the output module 312 displays CAD drawings of the virtual asset(s) 314 using a design tool, such as for example, NX MCD viewer. Further, the output module 312 is configured for displaying the test results and the simulation results on the user interface. The test results and the simulation results may also include graphical representations, such as heat maps depicting the status of virtual asset(s) upon execution of the modified control program.

The output module 312 is also configured for determining one or more engineering systems 110A-N in the technical installation 106 currently accessing the engineering project file. Further, the output module 312 is configured for transmitting a program update message to the one or more engineering systems 110A-N for automatically synchronizing the modified control program with corresponding locally stored control program. Each of the engineering systems 110A-N may have a locally stored copy of the control program, say A. The program update message comprises unique ID, name and timestamp data associated with the modified control program. The unique ID, name and timestamp data are created while dynamically generating the modified control program. Based on the unique ID, name and timestamp data associated with the modified control program, the locally stored control program in the engineering systems 110A-N is synchronized with the modified control program.

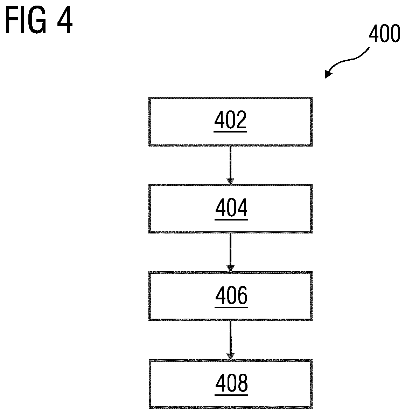

FIG 4 is a process flowchart illustrating an exemplary method 400 of dynamically generating control programs in a cloud computing environment, according to an embodiment of the present invention. At step 402, an engineering project file is received from at least one engineering system 110A-N via a communication network (104). The engineering project file comprises a control program desired to be deployed on an asset(s) 108A-N in a technical installation 106. At step 404, one or more modifications made in the control program is determined based on a corresponding pre-stored control program. The one or more modifications comprises adding, deleting or modifying information associated with the asset (s) 108A-N in the control program. At step 406, a modified control program is dynamically generated based on the one or more modifications made in the control program. At step 408, the modified control program is outputted on a user interface of the at least one engineering system 110A-N.

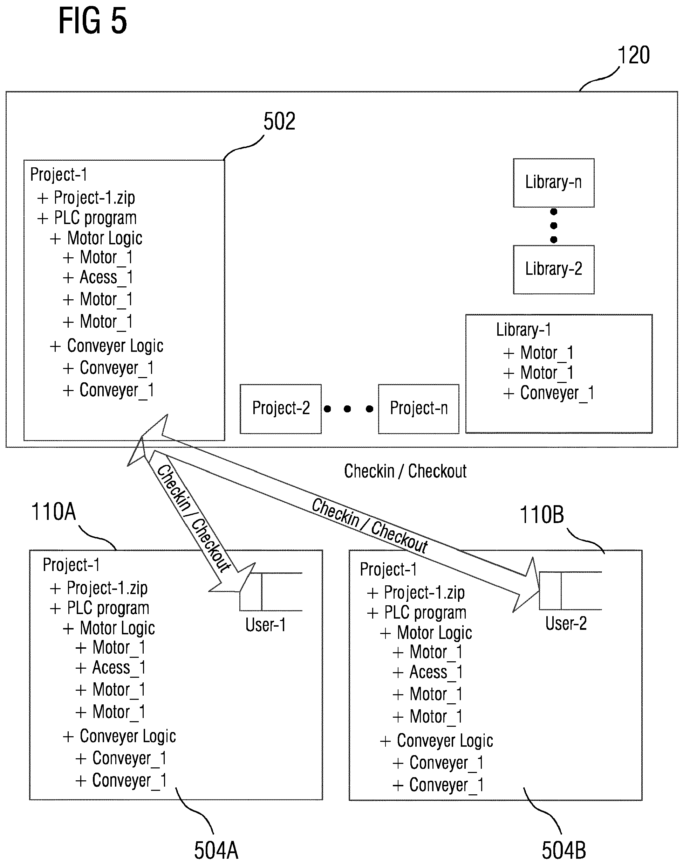

FIG 5 is an exemplary schematic representation of storing control programs in a version management module 302, according to an embodiment of the present invention. Specifically, FIG. 5 depicts the version management module 302 comprising one or more engineering projects associated with a technical installation 106. Each of the engineering project comprise a unique name and a unique identifier (ID) associated with it. Further, each engineering project comprises one or more control programs associated with an asset(s) 108A-N. Each of such control programs comprises a common part control program and a dependent part control program. A common part control program has a unique ID and unique name associated with it. A dependent part control program also has a unique name and ID associated with it. In FIG. 5, the engineering project files such as Project 1 and Project 2 comprises control program such as a PLC program. Each of such PLC program further comprises dependent control programs such as Motor logic, Conveyer Logic and so on. These dependent control programs are the function blocks. The dependent control programs have corresponding library of elements stored in the database 120 such as those shown in FIG. 5. Each of these engineering project files along with the control programs are stored in the version management module 302. Further, any modifications done to this basic template of engineering project can be updated in version management module 302 any time by users with the specific privileges. A typical user who wants to write some PLC program in a specific PLC project, first fetches the corresponding project from version management module 302 and then start writing specific PLC program parts. Once the compilation of the PLC program part is locally successful and user has tested the PLC program part locally on the engineering system 110A-N, he may export the specific PLC program part to the version management module 302 via the network 104. Once user imports the one or more PLC program parts to the version management module 302, the dependency checker module 304 and the control program processing module 306 then recognizes the modifications made by the user-1 and triggers an automatic compilation of the corresponding PLC program part stored in the database 120. In case of an import of common library program, a compile is triggered on all dependent PLC programs stored in the database 120.

Accordingly, consider that both User-1 and User-2 of engineering systems such as 110A-N are working on same engineering project named "Project-1". If user 1 has made changes to the control program 1 of the engineering project "Project-1", then these changes are determined by the cloud computing system 102 and a modified control program 1' is generated. This control program 1' is then outputted to the users who are currently accessing part of the control program 1. For example, in this case, the modified control program 1' is outputted to user 2 who is also accessing the engineering project "Project-1". The modified control program is automatically compiled by the cloud computing system 102, and downloaded and tested in a virtual environment, such as simulation environment 308. Further, the user-2 may also be notified about the modifications made to the control program 1. Further, the modified control program is automatically deployed on the asset(s) 108A-N of the technical installation 106.

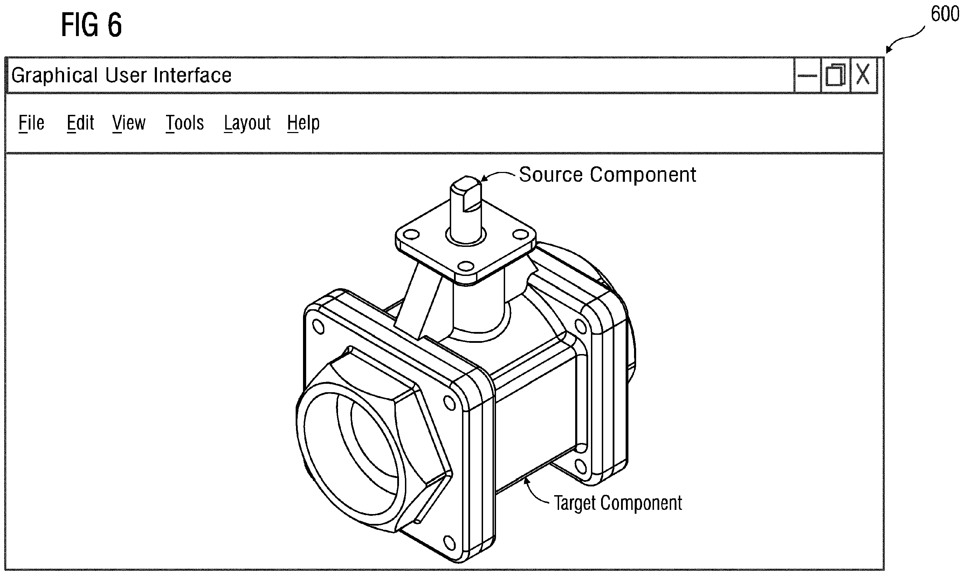

FIG 6 is a screenshot of an exemplary graphical user interface 600 for displaying one or more behavior models of virtual asset (s) 314 loaded with modified control program, according to an embodiment of the present invention. The graphical user interface 600 enables the user to perform one or more actions on the virtual asset(s) 314 in the simulation environment 308. For example, the graphical user interface 600 enables the user to generate behavior models of the virtual asset(s) 314 and dynamically display the behavior models on the user interface. For example, a computer aided design (CAD) drawing viewer tool may be used for visualizing a factory environment using three-dimensional simulation. In an embodiment, the CAD drawing viewer tool may be a CAD simulation viewer tool. The CAD drawing viewer tool may be interfaced with virtual asset(s) 314 loaded with the modified control program thereby helping the users of engineering systems 110A-N to visualize and test the behavior model based on the implemented modified control program. Users may observe in detail the effect of modified control program and ensure the proper working of the virtual asset(s) 314.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Further embodiments

1. A method for generating a control program on a cloud computing environment (100), the method comprising:
   receiving, by a processor (202), an engineering project file from at least one engineering system (110A-N) via a communication network (104), wherein the engineering project file comprises a control program desired to be deployed on an asset(s) 108A-N in a technical installation (106) ;
   determining, by the processor(202), one or more modifications made in the control program based on a corresponding pre-stored control program;
   dynamically, by the processor (202), generating a modified control program based on the one or more modifications made in the control program; and
   outputting, by the processor(202), the modified control program on a user interface of the at least one engineering system (110A-N).
2. The method according to embodiment 1, further comprising:
   simulating behavior of the modified control program in a simulation environment (308) on one or more simulation instances associated with a virtual asset (314);
   analyzing simulation results of the modified control program, wherein the simulation results are indicative of the behavior of the virtual asset (314) as if the control program is executed in real time; and
   updating the modified control program based on the analysis of the simulation results.
3. The method according to embodiment 1 or 2, further comprising:
   initiating deployment of the modified control program on the asset(s) 108A-N in the technical installation (106).
4. The method according to embodiments 1, 2 or 3, wherein determining one or more modifications made in the control program comprises:
   identifying unique identifier (ID) associated with the received engineering project file;
   retrieving corresponding pre-stored engineering project file from a database (120) based on the identified unique identifier (ID);
   comparing the control program in the received engineering project file with the corresponding pre-stored control program; and
   determining the one or more modifications made in the control program based on the comparison results.
5. The method according to embodiments 1 to 4, wherein dynamically generating the modified control program based on the one or more modifications comprises:
   updating the pre-stored control program with the determined one or more modifications; and
   automatically compiling the pre-stored control program with corresponding dependent control programs; and
   dynamically generating a modified control program, wherein the modified control program comprises compiled dependent control programs and a compiled common control program.
6. The method according to embodiments 1 or 2, wherein simulating behavior of the modified control program in the simulation environment (308) on the one or more simulation instances associated with the virtual asset (314) comprises:
   downloading the modified control program onto the virtual asset (314) in the simulation environment (308);
   generating the one or more simulation instances based on configuration of the virtual asset (314) using the modified control program; and
   executing one or more pre-defined tests on the virtual asset (314) using the one or more simulation instances; and
   simulating the behavior of the modified control program on the virtual asset (314) in the simulation environment (308).
7. The method according to embodiments 1 to 6, further comprising:
   determining one or more engineering systems (110A-N) in the technical installation (106) currently accessing the engineering project file; and
   transmitting a program update message to the one or more engineering systems (110A-N) for automatically synchronizing the modified control program with corresponding locally stored control program.
8. The method according to embodiment 1 to 7, wherein the one or more modifications comprises adding information associated with the asset (s) (108A-N) in the control program.
9. The method according to embodiment 1 to 7, wherein the one or more modifications comprises deleting information associated with the asset (s) (108A-N) in the control program.
10. The method according to embodiment 1 to 7, wherein the one or more modifications comprises changing information associated with the asset(s) (108A-N) in the control program.
11. A control program management system (114) comprising:
   one or more processor(s) (202); and
   a memory (204) coupled to the one or more processor (s) (202), wherein the memory (204) comprises a control program management module (114) stored in the form of machine-readable instructions executable by the one or more processor(s) (202), wherein the control program management module (114) is capable of performing a method according to any of the embodiments 1-10.
12. A cloud computing system (102) comprising:
   a server (116); and
   a cloud platform (112) comprising a control program management system (114) stored therein in the form of machine-readable instructions and executable by the at least one server (116), wherein the control program management system (114) is configured to perform a method according embodiments 1-10.
13. A cloud computing environment (100) comprising:
   a cloud computing system (102) according to embodiment 10;
   a technical installation (106) comprising one or more assets (108A-N); and
   at least one engineering system (110A-N) communicatively coupled to cloud computing system (102) and the technical installation (106).
14. A computer program product comprising machine-readable instructions stored therein, that when executed by one or more servers (116), cause the one or more servers (116) to perform a method according to any of the embodiments 1-10.

100-cloud computing environment
102-cloud computing system
104-network
106-technical installation
108A-N- asset(s)
110A-N-engineering system(s)
112-cloud platform
114-control program management system
116-server(s)
118-network interface
120-database
122-Application programming interface(s) (APIs)
202-processor(s)
204-memory
206-communication interface
208-input-output unit
210-bus
212-control program management module
302-version management module
304- a dependency check module
306-control program processing module
308-simulation environment
310-deployer module
312-output module
314-virtual asset(s)

## Claims

1. A method for generating a control program on a cloud computing environment (100), the method comprising:
receiving, by a processor (202), an engineering project file from at least one engineering system (110A-N) via a communication network (104), wherein the engineering project file comprises a control program desired to be deployed on an asset (s) 108A-N in a technical installation (106) ;
determining, by the processor(202), one or more modifications made in the control program based on a corresponding pre-stored control program;
dynamically, by the processor (202), generating a modified control program based on the one or more modifications made in the control program; and
outputting, by the processor(202), the modified control program on a user interface of the at least one engineering system (110A-N).

2. The method according to claim 1, further comprising:
simulating behavior of the modified control program in a simulation environment (308) on one or more simulation instances associated with a virtual asset (314);
analyzing simulation results of the modified control program, wherein the simulation results are indicative of the behavior of the virtual asset (314) as if the control program is executed in real time; and
updating the modified control program based on the analysis of the simulation results.

3. The method according to claim 1 or 2, further comprising:
initiating deployment of the modified control program on the asset(s) 108A-N in the technical installation (106).

4. The method according to claims 1, 2 or 3, wherein determining one or more modifications made in the control program comprises:
identifying unique identifier (ID) associated with the received engineering project file;
retrieving corresponding pre-stored engineering project file from a database (120) based on the identified unique identifier (ID);
comparing the control program in the received engineering project file with the corresponding pre-stored control program; and
determining the one or more modifications made in the control program based on the comparison results.

5. The method according to claims 1 to 4, wherein dynamically generating the modified control program based on the one or more modifications comprises:
updating the pre-stored control program with the determined one or more modifications; and
automatically compiling the pre-stored control program with corresponding dependent control programs; and
dynamically generating a modified control program, wherein the modified control program comprises compiled dependent control programs and a compiled common control program.

6. The method according to claims 1 or 2, wherein simulating behavior of the modified control program in the simulation environment (308) on the one or more simulation instances associated with the virtual asset (314) comprises:
downloading the modified control program onto the virtual asset (314) in the simulation environment (308);
generating the one or more simulation instances based on configuration of the virtual asset (314) using the modified control program; and
executing one or more pre-defined tests on the virtual asset (314) using the one or more simulation instances; and
simulating the behavior of the modified control program on the virtual asset (314) in the simulation environment (308).

7. The method according to claims 1 to 6, further comprising:
determining one or more engineering systems (110A-N) in the technical installation (106) currently accessing the engineering project file; and
transmitting a program update message to the one or more engineering systems (110A-N) for automatically synchronizing the modified control program with corresponding locally stored control program.

8. The method according to claim 1 to 7, wherein the one or more modifications comprises adding information associated with the asset(s) (108A-N) in the control program.

9. The method according to claim 1 to 7, wherein the one or more modifications comprises deleting information associated with the asset(s) (108A-N) in the control program.

10. The method according to claim 1 to 7, wherein the one or more modifications comprises changing information associated with the asset (s) (108A-N) in the control program.

11. A control program management system (114) comprising:
one or more processor(s) (202); and
a memory (204) coupled to the one or more processor (s) (202), wherein the memory (204) comprises a control program management module (114) stored in the form of machine-readable instructions executable by the one or more processor(s) (202), wherein the control program management module (114) is capable of performing a method according to any of the claims 1-10.

12. A cloud computing system (102) comprising:
a server (116); and
a cloud platform (112) comprising a control program management system (114) stored therein in the form of machine-readable instructions and executable by the at least one server (116), wherein the control program management system (114) is configured to perform a method according claims 1-10.

13. A cloud computing environment (100) comprising:
a cloud computing system (102) according to claim 10;
a technical installation (106) comprising one or more assets (108A-N); and
at least one engineering system (110A-N) communicatively coupled to cloud computing system (102) and the technical installation (106).

14. A computer program product comprising machine-readable instructions stored therein, that when executed by one or more servers (116), cause the one or more servers (116) to perform a method according to any of the claims 1-10.
